# EUROPEAN PATENT SPECIFICATION

(11) **EP 4 373 277 B1**
(45) Date of publication and mention of the grant of the patent: **25.02.2026**
(21) Application number: 22751678.8
(22) Date of filing: 14.07.2022
(51) Int. Cl.: A01N 43/80, A01P 13/02

(54) **METHOD FOR SPOT-TREATMENT APPLICATION AGAINST WEEDS**
VERFAHREN ZUR SPOT-BEHANDLUNG GEGEN UNKRAUT
MÉTHODE DE TRAITEMENT LOCALISÉ CONTRE LES MAUVAISES HERBES

(30) Priority: 19.07.2021 US 202163223167 P; 05.01.2022 US 202263296679 P
(43) Date of publication of application: 29.05.2024
(73) Proprietor: Bayer Aktiengesellschaft, 51373 Leverkusen (DE); Monsanto Technology LLC, St. Louis, MO 63167 (US)
(72) Inventor: LORENTZ, Lothar, 51373 Leverkusen (DE); STOLZ, Sabine, 51373 Leverkusen (DE); WEGENER, Martin, 51373 Leverkusen (DE); PEREZ CATALAN, Julio, 51373 Leverkusen (DE); TRABOLD, Klaus, 51373 Leverkusen (DE); MCGREGOR, John, St. Louis, Missouri 63167 (US); FULGENCIO, Ramisis, Singapur 437161 (SG); NIGRO, Daniel Franca, 04779-900 Sao Paulo (BR); KAZMIERCZAK, Angela, St. Louis, Missouri 63167 (US)
(74) Representative: BIP Patents
(86) International application number: PCT/EP2022/069713
(87) International publication number: WO 2023/001679

(56) References cited:
- WO-A1-2018/228985

## Description

### FIELD OF THE INVENTION

The invention relates to the field of plant protection and environmental health, more specifically to the use of agrochemicals for precision application to control unwanted vegetation.

### BACKGROUND OF THE INVENTION

Weed control practices are targeted to remove weeds from an agricultural field to reduce competition of the crop plants for natural resources and to minimize yield loss. Using a non-selective herbicide on an agricultural field for crop plants that are not resistant against the non-selective herbicide cannot be treated with traditional field sprayers as these types of sprayers treat herbicides over the whole agricultural field. To overcome such issues, hooded field sprayers can be used in combination with non-selective herbicides. However, even though non-selective herbicides are applied with spot-treatment application against weeds the non-selective herbicides can severely damage the crop plants because of the uptake of such herbicides by the crop plants through the soil or due to *e.g.* volatility of the applied compounds in close proximity to sensitive crop plants.

Other agrochemicals have disadvantages in that the weed plants are not controlled sufficiently or that some weeds are not controlled at all (gaps). Therefore, there is a general need for novel and alternative methods to protect crop plants on an agricultural field against weeds.

Compounds from the structural class of substituted isoxazolincarboxamides are known as herbicides useful for weed-control against a broad range of weeds from WO2018/228985 and WO2019/145245 in burn-down applications. It is also known to combine such herbicidal active ingredients with some other herbicides for weed control, see e. g. WO2020/114932.

Now it has been found that some compounds selected from the above group of substituted isoxazolincarboxamides surprisingly can be used for spot-treatment applications against weeds on agricultural fields with crop plants without substantial harming the crop plants. The spot-treatment application is surprising because it is known that many herbicides with broad range activity against weeds also damage crop plants because of their uptake by crop plants via the soil even if they have only be applied in the close surroundings of the crop plants. The compounds of formula (Ia), however, are safe to the crop when applied in close proximity as they appear to not leach into the crop root zone or become volatile, which prevent the crop plants from uptake of the agrochemical.

### DETAILED DESCRIPTION OF THE INVENTION

One object of the invention is the use of one or more substituted isoxazolincarboxamides of the formula (Ia) or agrochemical acceptable salts thereof, for spot-treatment application against weeds of an agricultural field where a plurality of crop plants grow, have been sown, have been transplanted, are to be sown and/or are to be transplanted.

### Definitions

Halogen represents radicals of fluorine, chlorine, bromine and iodine. Preference is given to the radicals of fluorine and chlorine.

Alkyl means saturated straight-chain or branched hydrocarbyl radicals having the number of carbon atoms specified in each case, e.g. C₁-C₆-alkyl such as methyl, ethyl, propyl, 1-methylethyl, butyl, 1-methylpropyl, 2-methylpropyl, 1,1-dimethylethyl, pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl,1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl and 1-ethyl-2-methylpropyl.

Alkenyl means unsaturated straight-chain or branched hydrocarbyl radicals having the number of carbon atoms specified in each case and one double bond in any position, e.g. C₂-C₆-alkenyl such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl and 1-ethyl-2-methyl-2-propenyl.

Alkynyl represents a straight-chain or branched hydrocarbyl groups having 2 to 8, preferably 2 to 6, carbon atoms and one triple bond in any position. Non-limiting examples include ethynyl, prop-1-ynyl, prop-2-ynyl, but-1-ynyl, but-2-ynyl, but-3-ynyl, 1-methylprop-2-ynyl, pent-1-ynyl, pent-2-ynyl, pent-3-ynyl, pent-4-ynyl, 1-methylbut-2-ynyl, 1-methylbut-3-ynyl, 2-methylbut-3-ynyl, 3-methylbut-1-ynyl, 1,1-dimethylprop-2-ynyl, 1-ethylprop-2-ynyl, hex-1-ynyl, hex-2-ynyl, hex-3-ynyl, hex-4-ynyl, hex-5-ynyl, 1-methylpent-2-ynyl, 1-methylpent-3-ynyl, 1-methylpent-4-ynyl, 2-methylpent-3-ynyl, 2-methylpent-4-ynyl, 3-methylpent-1-ynyl, 3-methylpent-4-ynyl, 4-methylpent-1-ynyl, 4-methylpent-2-ynyl, 1,1-dimethylbut-2-ynyl, 1,1-dimethylbut-3-ynyl, 1,2-dimethylbut-3-ynyl, 2,2-dimethylbut-3-ynyl, 3,3-dimethylbut-1-ynyl, 1-ethylbut-2-ynyl, 1-ethylbut-3-ynyl, 2-ethylbut-3-ynyl and 1-ethyl-1-methylprop-2-ynyl.

Cycloalkyl means a carbocyclic saturated ring system having preferably 3-8 ring carbon atoms, for example cyclopropyl, cyclobutyl, cyclopentyl or cyclohexyl. In the case of optionally substituted cycloalkyl, cyclic systems with substituents are included, also including substituents with a double bond on the cycloalkyl radical, for example an alkylidene group such as methylidene.

Alkoxy means saturated straight-chain or branched alkoxy radicals having the number of carbon atoms specified in each case, for example C₁-C₆-alkoxy such as methoxy, ethoxy, propoxy, 1-methylethoxy, butoxy, 1-methylpropoxy, 2-methylpropoxy, 1,1-dimethylethoxy, pentoxy, 1-methylbutoxy, 2-methylbutoxy, 3-methylbutoxy, 2,2-dimethylpropoxy, 1-ethylpropoxy, hexoxy, 1,1-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy and 1-ethyl-2-methylpropoxy. Halogen-substituted alkoxy means straight-chain or branched alkoxy radicals having the number of carbon atoms specified in each case, where some or all of the hydrogen atoms in these groups may be replaced by halogen atoms as specified above, e.g. C₁-C₂-haloalkoxy such as chloromethoxy, bromomethoxy, dichloromethoxy, trichloromethoxy, fluoromethoxy, difluoromethoxy, trifluoromethoxy, chlorofluoromethoxy, dichlorofluoromethoxy, chlorodifluoromethoxy, 1-chloroethoxy, 1-bromoethoxy, 1-fluoroethoxy, 2-fluoroethoxy, 2,2-difluoroethoxy, 2,2,2-trifluoroethoxy, 2-chloro-2-fluoroethoxy, 2-chloro-1,2-difluoroethoxy, 2,2-dichloro-2-fluoroethoxy, 2,2,2-trichloroethoxy, pentafluoroethoxy and 1,1,1-trifluoroprop-2-oxy.

In the following the compounds of formula **(Ia)** or their salts to be used according to the invention are also in short named as "compounds (Ia) according to the invention" or just "compounds (Ia)".

The compounds (Ia) or salts thereof are generally known from WO2018/228985 and WO2019/145245 or can be prepared according to the processes described therein.

The compounds **(Ia)** or agrochemical acceptable salts thereof wherein 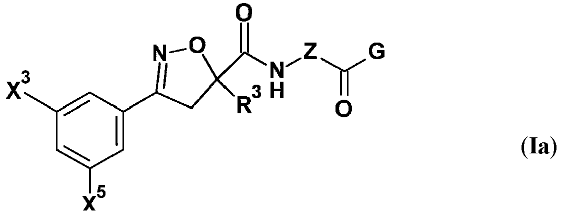 in which
X³, X⁵, R³ and G are as described above;
Z means Z-1 a or Z-4a, 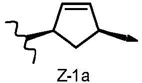 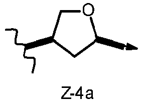
wherein Z-4a means the mixture of both structures Z-4b and Z-4c; 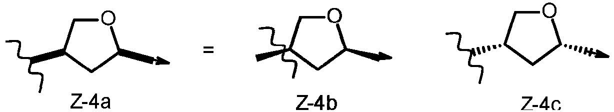 and wherein the arrow means a bond to the group CO-G in formula **(Ia)**
for spot-treatment application against weeds of an agricultural field where a plurality of crop plants grow, have been sown, have been transplanted, are to be sown and/or are to be transplanted.

The compounds **(Ia)** shown in table 1 or agrochemical acceptable salts thereof for spot-treatment application against weeds of an agricultural field where a plurality of crop plants grow, have been sown, have been transplanted, are to be sown and/or are to be transplanted:

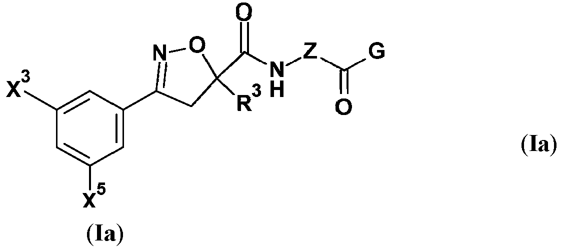

**Table 1: Compounds (Ia)**

| No. | X³ | X⁵ | R³ | 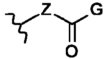 |
|---|---|---|---|---|
| A 1.26 | F | F | (S)-vinyl | 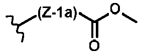 |
| A 1.68 | F | F | (S)-vinyl | 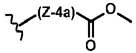 |

The compounds of the formula (Ia) and their salts, all termed herein below as compounds of formula (Ia), show herbicidal activity against a broad range of economically important monocotyledonous and dicotyledonous harmful plants. The compounds of formula (Ia) also act efficiently on perennial weeds which produce shoots from rhizomes, root stocks or other perennial organs and which are difficult to control.

The herbicidal compounds (Ia) mentioned above show an excellent and desirable effect for spot-treatment application against weeds of an agricultural field where a plurality of crop plants grow, have been sown, have been transplanted, are to be sown and/or are to be transplanted.

The terms "spot-treatment against weeds" refers to the opposite of a uniform surface treatment of a herbicide on an agricultural field (such as e.g. a blanked or broadcast spray application). Thus, the term refers to a selected treatment for a locus where weeds are growing or a locus (soil) where weeds may grow and may compete with the crop for resources. In addition, the term also includes a partial herbicide application throughout a field for weed control, e.g. application only on single weed plants growing scattered throughout the field, bigger weed patches with a size of less than a m² to up to more than 100 m² each, to a uniform treatment of the interrow space of row crops (also referred to as a band-treatment). The spot-treatment may be applied to only control a specific weed species within the field, based on automatic weed species recognition or weed-crop species recognition on the application device, guided by a second device or based on field maps, mapping the weed species infestation throughout the field, done before control application. Also, the spot-treatment may be applied non selective to all weeds growing in the applied spot, bigger patches or in the interrow space without differentiating among different weed species.

Spot-treatment against weeds on an agricultural field comprises preferably a spot-spray-application. The spot-spraying comprises spray applications which are sometimes referred to as "direct foliar spray applications" which relate to herbicide applications on weeds between rows of crops by directing the spray only on weeds avoiding the crop. Spot-spraying also comprises spray applications which are sometimes referred to as "protected foliar spray applications" which relate to herbicide applications on weeds by covering the crops which are wide spaced with covers (such as e.g. polyethylene covers) or by using a protective shield or hood covering the nozzle and spray, physically protecting the crop from direct spray or spray drift. It may also be applied using nozzles with a tight spray angle preventing fine droplets causing driftable fines reaching the crop plants and limiting the spray to the closest proximity on and around the target plant.

Spot-spraying comprises spray applications that are sometimes referred to as "band spray applications" which relate to herbicide applications on the soil/weeds to a restricted band along the crop rows leaving untreated band in the interrows.

Spot-spraying may be performed by visually spraying the compound of the present invention by using a handheld nozzle or a robot arm nozzle while a human sprayer walks through the agricultural field. Alternatively, the sprayer drives on a vehicle such as a tractor with a e.g. hooded boom sprayer or uses a flying device such as an Unmanned Arial Vehicle (UAV) or a ground-based robot such as a Unmanned Ground Vehicle (UGV) for the spot-spraying application. The application targeted to the weed infestation on a field may be performed with small and autonomous driving devices operating in the interrow space of row crops or by devices stirred by a second device monitoring in real time or with time delay and creating a weed mapping throughout the field prior to treatment. A further option to control the weed infestation in the field, would be using implements hocked up to the three point of a tractor, pulled or self-driving/autonomous implements overarching several crop rows. The stirring of such devices may be based on RTK GPS/Galileo systems, supported by row guidance systems, based on camera, NIR, sonar or radar crop and surface recognition or row sensors sensing physically the resistance of crop plants in the row. Furthermore, spot-spraying may be performed by mapping the areas on the agricultural field where weeds are growing or may grow in advance of the herbicide application process (e.g. with proximity or remote sensing methods) and spraying the compound of the present invention based on the map information e.g. in cases where not all weeds on the agricultural field need to be controlled but e.g. only those that are growing in close proximity to the crop plants and compete with nutritional resources. For the spot-spraying according to the map information the use of location determining means such as obtained by RTK- GPS or the like is required.

Spot-spraying may also be performed as continuous spray onto the interrow space of row crops or by opening and closing a hydraulic nozzle respectively the liquid feeding system of an atomization disc automatically or manually. The map information may be created based on image information taken by a manned or unmanned aerial or ground vehicle or by conventional field scouting operations as performed by farmers. These technologies are a form of emerging agriculture called precision agriculture, smart agriculture, digital agriculture. etc. The partial spraying pattern on an agricultural field such as achieved with spot-spraying is also referred to as VRA (Variable Rate Application).

The term "crop plants" refers to corn, soya bean, cotton, peanuts, Brassica oil seeds such as Brassica napus (e.g. Canola), Brassica rapa, B. juncea (e.g. (field) mustard) and Brassica carinata, rice, wheat, sugar beet, sugar cane, oats, rye, barley, millet and sorghum, triticale, flax, grapes and various fruit and vegetables from various botanic taxa, for example Rosaceae sp. (for example pome fruits such as apples and pears, but also stone fruits such as apricots, cherries, almonds and peaches, and berry fruits such as strawberries), Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp. (for example ginger, banana trees and plantations), Rubiaceae sp. (for example coffee), Theaceae sp., Sterculiceae sp., Rutaceae sp. (for example lemons, oranges and grapefruit); Solanaceae sp. (for example tomatoes, potatoes, peppers, eggplants), Liliaceae sp., Compositae sp. (for example safflower, sunflower, lettuce, artichokes and chicory - including root chicory, endive or common chicory), Umbelliferae sp. (for example carrots, parsley, celery and celeriac), Cucurbitaceae sp. (for example cucumbers - including gherkins, pumpkins, watermelons, calabashes and melons), Alliaceae sp. (for example leeks and onions), Cruciferae sp. (for example white cabbage, red cabbage, broccoli, cauliflower, Brussels sprouts, pak choi, kohlrabi, radishes, horseradish, cress and chinese cabbage), Euphorbiaceae (for example Cassava), Leguminosae sp. (for example peanuts, peas, chickpeas and beans - for example common beans and broad beans, phaseolus and faba beans and lentils), Chenopodiaceae sp. (for example Swiss chard, fodder beet, spinach, beetroot), Malvaceae (for example okra), Asparagaceae (for example asparagus); useful plants and ornamental plants in the garden and woods; and in each case genetically modified types of these plants.

Within the term crop plants, particularly preferred are com, soya bean, cotton, sunflower, peanuts, sugar beet, sugar cane, strawberries, Solanaceae sp. (for example tomatoes, potatoes, peppers, eggplants), Liliaceae sp., Compositae sp. (for example safflower, sunflower, lettuce, artichokes), Umbelliferae sp. (for example carrots), Leguminosae sp. (for example peanuts, peas, chickpeas and beans - for example common beans and broad beans, phaseolus and faba beans, lentils), Chenopodiaceae sp. (for example Swiss chard, fodder beet, beetroot), Malvaceae (for example okra), Euphorbiaceae (for example Cassava), Asparagaceae (for example asparagus); and in each case genetically modified types of these plants.

As mentioned above, it is possible to treat all plants and their parts in accordance with the invention. In a preferred embodiment, wild plant species and plant cultivars, or those obtained by conventional biological breeding techniques, such as crossing or protoplast fusion, and parts thereof, are treated. In a further preferred embodiment, transgenic plants and plant cultivars obtained by genetic engineering methods, if appropriate in combination with conventional methods (genetically modified organisms), and parts thereof are treated. The term "parts" or "parts of plants" or "plant parts" has been explained above. Particular preference is given in accordance with the invention to treating plants of the respective commercially customary plant cultivars or those that are in use. Plant cultivars are understood to mean plants having new properties ("traits") which have been grown by conventional breeding, by mutagenesis or by recombinant DNA techniques. They may be cultivars, varieties, biotypes or genotypes.

Depending on the plant species or plant cultivars, their location and growth conditions (soils, climate, vegetation period, diet), the inventive treatment may also result in superadditive ("synergistic") effects. For example, the following effects which exceed the effects actually to be expected are possible: reduced application rates and/or widened spectrum of activity and/or increased efficacy of the active ingredients and compositions which can be used in accordance with the invention, better plant growth, increased tolerance to high or low temperatures, increased tolerance to drought or to water or soil salinity, increased flowering performance, easier harvesting, accelerated maturation, higher harvest yields, bigger fruits, greater plant height, greener leaf color, earlier flowering, higher quality and/or a higher nutritional value of the harvested products, higher sugar concentration within the fruits, better storage stability and/or processability of the harvested products.

Plants that may be treated according to the invention are hybrid plants that already express the characteristics of heterosis, or hybrid effect, which results in generally higher yield, vigor, better health and resistance towards biotic and abiotic stress factors. Such plants are typically produced by crossing an inbred male-sterile parent line (the female crossbreeding parent) with another inbred male-fertile parent line (the male crossbreeding parent). Hybrid seed is typically harvested from the male-sterile plants and sold to growers. Male-sterile plants can sometimes (e.g. in com) be produced by detasseling (i.e. the mechanical removal of the male reproductive organs or male flowers) but, more typically, male sterility is the result of genetic determinants in the plant genome. In that case, and especially when seed is the desired product to be harvested from the hybrid plants, it is typically beneficial to ensure that male fertility in hybrid plants, which contain the genetic determinants responsible for male sterility, is fully restored. This can be accomplished by ensuring that the male crossbreeding parents have appropriate fertility restorer genes which are capable of restoring the male fertility in hybrid plants that contain the genetic determinants responsible for male sterility. Genetic determinants for male sterility may be located in the cytoplasm. Examples of cytoplasmic male sterility (CMS) were for instance described for Brassica species. However, genetic determinants for male sterility can also be located in the nuclear genome. Male-sterile plants can also be obtained by plant biotechnology methods such as genetic engineering. A particularly useful means of obtaining male-sterile plants is described in WO 89/10396 in which, for example, a ribonuclease such as a barnase is selectively expressed in the tapetum cells in the stamens. Fertility can then be restored by expression in the tapetum cells of a ribonuclease inhibitor such as barstar.

The spot-treatment application against weeds as discussed herein is in particular useful for crop plants that are not resistance against the compound (Ia).

The Terms "where a plurality of crop plants grow, have been sown, have transplanted, are to be sown and/or are to be transplanted" refer to time when compound (Ia) can be applied by spot-treatment against weeds on an agricultural field. As an example, the crop plants have not yet being planted and the compound (Ia) is applied by spot-treatment against weeds e.g. at a locus where the crop plants are intended to be planted and/or transplanted. As another example, the crop plants have been sown but no seedlings are yet visible. The compound (Ia) can be applied at this stadium to a locus apart from where the crop seeds have been planted (e.g. 10 cm, more preferrable 5 cm arround the planted crop seeds and/or transplanted crop, ). It is possible, that the geolocation of the crop seeds has being recorded during the planting operation and that this information is used to avoid spot-treatment e.g with precision farming vehicles directly where crop seeds have being planted. As another example, the plurality of crop plants are seedlings or are already in a vegetative (or reproductive) growth stage and the compound (Ia) is applied against weeds with spot-treatment as discussed herein e.g. with precision farming vehicles. The term "transplanted" as used herein refers to the agricultural technique of moving a crop plant from one location to another. Most often this takes the form of starting a crop plant from seed in optimal conditions, such as in a greenhouse or protected nursery bed, then replanting it in another, usually outdoor, growing location.

As examples of the weeds to be controlled there can be mentioned the following: Monocotyledonous weeds such as: Digitaria ciliayis (Retz.) Koeler, Eleusine indica (L.) Gaertn., Digitaria sanguinalis (L.) Scop. Setaria viridis (L.) Beauv. var. viridis, Poa annua L., Alopecurus aequalis Sobol. var. amurensis, Imperata cylindrica (L.) Beau., Luzula capitata (Mig.) Mig, Digitaria radicosa (Presl) Mig., Digitaria violascens Link), Setaria faberii Herrm, Holcus lanatus, Echinocloa etc. Dicotyledonous weeds such as: Rumex japonicus Houtt., Portulaca oleracea L. var. oleracea, Stellaria neglecta Weihe, Kummerowia striata (Thunb. ex Murray) Schindl., Galinsoga ciliata (Rafin.) Blake, Cerastium glomeratum Thuill., Stellaria alsine Grimm. var. undulata (Thunb. ex Murray) Ohwi, Cardamine flexuosa With., Capsella bursa-pastoris Medicus, Lamium amplexicaule L., Veronica persica Poir., Veronica filiformis, Aster maaekii Regel, Oxalis corniculata L., Hydrocotyle sibthorpioides Lam., Plantago asiatica L., Plantago lanceolata L., Plantago media, Plantago major, Artemisia indica Willd. var. maximowiczii (Nakai) Hara, Rumex acetosa L., Bellis perennis, Achilea millefolia , Crepis capillaris, Amaranthus ssp. , Prunella vulgaris, Ranunculus repens, Ranunculus acris,, Trifolium repens, Trifolium dubium, Potentilla spp. etc. Considered as weeds are all plants when growing where unwanted. As an additional example a volunteer crop (a crop that is growing at a location where another crop is intended to grow) can be spot-treated and controlled according to the use and method of the invention.

The use of the herbicidal compounds (Ia), however, should not be restricted to these weeds in any way, but can be applied against other weeds in the same manner.

If the compounds according to the invention are applied to the soil surface before germination (pre-emergence of the weeds), then the weed seedlings are either prevented completely from emerging or the weeds grow until they have reached the cotyledon stage, but then their growth stops and they finally die completely after three to four weeks have elapsed.

When the active substances are applied post-emergence to the green parts of the plants, growth stops over time after treatment and the weed plants remain at the stage of growth at the time of application, or they die completely after a certain time, so that in this manner competition by the weeds, which is harmful to the crop, is eliminated at a very early stage and in a sustained manner.

The activity allows to apply the compounds as effective herbicidal active ingredients pre- and post-emergence, related to the emergence of the weeds, for controlling broad-leaved weeds and grass weeds. Preferably the compounds (Ia) are applied by spot-treatment application against weeds on the agricultural field before or after emergence of the weeds. Preferably the compounds (Ia) are applied post-emergence.

According to another embodiment of the invention, the compounds (Ia) are applied against weeds by spot-treatment on an agricultural field, wherein spot-treatment is performed with hooded sprayer equipment and/or with drift reduction nozzle sprayer equipment.

The term "hooded sprayer equipment" refers to sprayers that comprise a hood or shield around the spraying unit which can be a hydraulic nozzle or an atomizing disc such as a spinning disc. The hood is intended to ensure that the sprayed liquid is applied to the intended locus/target. In addition, drift can be reduced or avoided. There are many producers who offer such equipment and which are known to the skilled person in the art.

The term "drift reduction nozzle sprayer equipment" refers to targeted and directed spray application onto weeds without the need of a hood to protect against drift. Appropriate Nozzles for such purposes may be selected from Turbo TeeJet nozzles; flat fan-type nozzle such as a

Hypro Guardian; Venturi Air-induction nozzles such as Greenleaf TurboDrop, Greenleaf TurboDrop XL, Greenleaf TurboDrop XL-D, Greenleaf AirMix, Air Bubble Jet, Hardi Injet

TeeJet Air Induction (AI), Turbo TeeJet Induction nozzle, Air Induction XR Flat Fan, Hypro Ultra-Lo-Drift, Hypro AVI, Air-inducing Venturi, Delavan Raindrop Ultra, Hypro Guardian Air.

According to another embodiment of the invention, the compounds (Ia) are applied against weeds by spot-treatment on an agricultural field, wherein spot-treatment is performed with a precision farming vehicle, preferably a tractor with a mounted sprayer (preferably a shielded sprayer), a tractor connected to a tractor pull-type sprayer (preferably a shielded sprayer), an Unmanned Aerial Vehicle (UAV) and/or an Unmanned Ground Vehicle (UGV).

A precision farming vehicle can receive a weed map which has been generated with remote and/or proximity sensing methods and use the weed map to apply the compounds (Ia) against weeds by spot-treatment. Alternatively, the precising farming vehicle comprises sensors to detect weeds (e.g. imaging sensors) and is able to apply the compounds (Ia) against such weeds by spot-treatment shortly after they have been identified. The terms "precision farming vehicle" refers preferably to a tractor with a mounted sprayer (preferably a shielded sprayer), a tractor connected to a tractor pull-type sprayer (preferably a shielded sprayer), UAVs and/or UGVs which can apply the compounds (Ia) according to the weed map or sense and control weeds by spot-treatment independently of substantial human intervention.

According to another embodiment of the invention, the compounds (Ia) are applied against weeds by spot-treatment on an agricultural field, wherein the application of the compound compounds (Ia) to the foliar part of the plurality of crop plants on the agricultural field is avoided.

The compounds (Ia) according to the invention are generally applied to the weed plants or seed thereof by treating the locus thereof with an agricultural composition comprising one or more compounds (Ia) or salts thereof. The term "locus" of a plant or plants comprises the plant or plants, part of the plants, seed of the plants or the area where the plants are growing.

The amount of compounds (Ia) to be applied will depend on various factors, such as the subject of the treatment, such as, plants or soil, the type of treatment, such as, for example spraying or spreading, the purpose of the treatment, such as, for example preventive or curative, the application time, environmental conditions or the crop plants on the agricultural field.

The application rates for the herbicidal compounds of formula (Ia) or salts thereof can vary within a broad range and generally depend on the weed spectrum to be controlled, the soil type and weather conditions or whether the compounds are combined with other herbicidal active ingredients. Suitable applications rates generally are within the range of from 0.01 to 2000 g active ingredient (= compounds (Ia)) per hectare (a.i./ha), preferably of from 0.5 to 500 g a.i./ha, more preferably 5 bis 200 g a.i./ha. A spray volume of between 10 to 10000 liter, preferably 10 to 300 liter per hectare can be applied.

It is also possible to use the compounds (Ia) in combination with other pesticidally active substances or nutrients, such as, for example, insecticides, acaricides, herbicides, fungicides, safeners, fertilizers and/or growth regulators or nutrients useful for treating the plurality of crop plants against phytopathogenic diseases or for growth regulation or growth promotion of the plurality of crop plants on the agricultural field.

The invention thus also relates to a method for spot-treatment application against weeds on an agricultural field where a plurality of crop plants grow, have been sown, have been transplanted, are to be sown and/or are to be transplanted, characterized by spot-spraying application of (A) one or more compounds of the formula (Ia) or a salt thereof [type (A) herbicides], optionally together, before or after the application of one or more other active ingredients selected from the group consisting of (B) other herbicides [type (B) herbicides] useful in the treatment of an agricultural field with a plurality of crop plants, and optionally together, before or after the application of one or more (C) other active ingredients [type (C) active ingredients] useful in the treatment of an agricultural field with a plurality of crop plants.

In an embodiment, the herbicides [type (B) herbicides] do not necessarily have to be applied by spot-treatment but can also be applied uniformingly e.g. with a blanked spray application if they are selective herbicides and do not harm the crop plants on the agricultural field. The same is valid for the other active ingredients [type (C) active ingredients].

In an embodiment, the compositions comprising compound (Ia), optionally together with other herbicides [type (B) herbicides] and/or other active ingredients [type (C) active ingredients] can be used for spot-treamtent in a tank mix. Alternatively, the compounds can be mixed shortly before the spot-treatment application e.g. in a feeding pipe for a spraying nozzle/atomizing device or via two separate feeding pipes on a spinning disc. An advantage of this last-mentioned application is that a precision farming vehicle may comprise various tanks with different active ingredients and may *ad hoc* combine different active ingredients depending on what is required to control the identified weeds. It is also possible that the precision farming vehicle applies compound (Ia) against weeds with spot-treatment but applies other herbicides [type (B) herbicides] and/or other active ingredients [type (C) active ingredients] uniformingly such e.g. with a blanket spray application.

Type (A) herbicides are the compounds of formula (Ia) or their salts.

Type (B) herbicides are other herbicides useful to be combined with compounds (Ia) for the purpose of broadening weed spectrum to be controlled or increasing herbicidal effect (some possible type B herbicides are mentioned further below).

Type (C) active ingredients can be, for instance, insecticides, acaricides, fungicides, safeners, fertilizers and/or growth regulators or nutrients useful for treating the plurality of crop plants against phytopathogenic diseases or for growth regulation or growth promotion of the plurality of crop plants on the agricultural field.

Type (B) herbicides are other herbicides useful to be combined with compounds (Ia) for the purpose of broadening weed spectrum to be controlled or increasing herbicidal effect (some possible type B herbicides are mentioned further below).

Possible combination partners for the inventive active ingredients, in mixed formulations or in a tankmix, are, for example, known active ingredients which are based on inhibition of, for example, acetolactate synthase, acetyl-coenzyme A carboxylase, PS I, PS II, HPPDO, phytoene desaturase, protoporphyrinogen oxidase, glutamine synthetase, cellulose biosynthesis, 5-enolpyruvylshikimate-3-phosphate synthetase. Such compounds, and also other usable compounds, with a mechanism of action that is, in some cases, unknown or different, are described, for example, in Weed Research 26, 441-445 (1986), or "The Pesticide Manual", 14th edition 2006/2007, published by the British Crop Protection Council (hereinafter also abbreviated to "PM"), "The e-Pesticide Manual", version 4.0 2006/2007, published by the British Crop Protection Council and literature cited there, "Compendium of Pesticide Common Names" available from the internet (http://www.alanwood.net/pesticides/).

Herbicides, plant growth regulators and herbicide safeners, which are known from the literature and which can be combined with the compounds of the formula (Ia), include, for example, the following active ingredients (note: the compounds are either referred to by the common name in accordance with the International Organization for Standardization (ISO) or by the chemical name, if appropriate together with a customary code number):

acetochlor, acifluorfen, acifluorfen-methyl, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, aminopyralid-dimethylammonium, aminopyralid-tripromine, amitrole, ammoniumsulfamate, anilofos, asulam, asulam-potassium, asulam sodium, atrazine, azafenidin, azimsulfuron, beflubutamid, (S)-(-)-beflubutamid, beflubutamid-M, benazolin, benazolin-ethyl, benazolin-dimethylammonium, benazolin-potassium, benfluralin, benfuresate, bensulfuron, bensulfuron-methyl, bensulide, bentazone, bentazone-sdium, benzobicyclon, benzofenap, bicyclopyrone, bifenox, bilanafos, bilanafos-sodium, bipyrazone, bispyribac, bispyribac-sodium, bixlozone, bromacil, bromacil-lithium, bromacil-sodium, bromobutide, bromofenoxim, bromoxynil, bromoxynil-butyrate, potassium, heptanoate und octanoate, busoxinone, butachlor, butafenacil, butamifos, butenachlor, butralin, butroxydim, butylate, cafenstrole, cambendichlor, carbetamide, carfentrazone, carfentrazone-ethyl, chloramben, chloramben-ammonium, chloramben-diolamine, chlroamben-methyl, chloramben-methylammonium, chloramben-sodium, chlorbromuron, chlorfenac, chlorfenac-ammonium, chlorfenac-sodium, chlorfenprop, chlorfenprop-methyl, chlorflurenol, chlorflurenol-methyl, chloridazon, chlorimuron, chlorimuron-ethyl, chlorophthalim, chlorotoluron, chlorsulfuron, chlorthal, chlorthal-dimethyl, chlorthal-monomethyl, cinidon, cinidon-ethyl, cinmethylin, exo-(+)-cinmethylin, i.e. (1R,25,4S)-4-isopropyl-1-methyl-2-[(2-methylbenzyl)oxy]-7-oxabicyclo[2.2.1]heptane, exo-(-)-cinmethylin, i.e. (1R,2S,4S)-4-isopropyl-1-methyl-2-[(2-methylbenzyl)oxy]-7-oxabicyclo[2.2.1]heptane, cinosulfuron, clacyfos, clethodim, clodinafop, clodinafop-ethyl, clodinafop-propargyl, clomazone, clomeprop, clopyralid, clopyralid-methyl, clopyralid-olamine, clopyralid-potassium, clopyralid-tripomine, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D (including theammonium, -butotyl, -butyl, -choline, - diethylammonium, -dimethylammonium, -diolamine, -doboxyl, -dodecylammonium, -etexyl, -ethyl, - 2-ethylhexyl, -heptylammonium, -isobutyl, -isooctyl, -isopropyl, -isopropylammonium, -lithium, - meptyl, -methyl, -potassium, -tetradecylammonium, -triethylammonium, -triisopropanol ammonium, -tripromine and -trolamine salt thereof), 2,4-DB, 2,4-DB-butyl, -dimethylammonium, -isooctyl, - potassium und -sodium, daimuron (dymron), dalapon, dalapon-calcium, dalapon-magnesium, dalapon-sodium, dazomet, dazomet-sodium, n-decanol, 7-deoxy-D-sedoheptulose, desmedipham, detosyl-pyrazolate (DTP), dicamba and its salts, e. g. dicamba-biproamine, dicamba-N,N-Bis(3-aminopropyl)methylamine, dicamba-butotyl, dicamba-choline, dicamba-diglycolamine, dicamba-dimethylammonium, dicamba-diethanolaminemmonium, dicamba-diethylammonium, dicamba-isopropylammonium, dicamba-methyl, dicamba-monoethanolaminedicamba-olamine, dicamba-potassium, dicamba-sodium, dicamba-triethanolamine, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-butotyl, dichlroprop-dimethylammonium, dichhlorprop-etexyl, dichlorprop-ethylammonium, dichlorprop-isoctyl, dichlorprop-methyl, dichlorprop-postassium, dichlorprop-sodium, dichlorprop-P, dichlorprop-P-dimethylammonium, dichlorprop-P-etexyl, dichlorprop-P-potassium, dichlorprop-sodium, diclofop, diclofop-methyl, diclofop-P, diclofop-P-methyl, diclosulam, difenzoquat, difenzoquat-metilsulfate, diflufenican, diflufenzopyr, diflufenzopyr-sodium, dimefuron, dimepiperate, dimesulfazet, dimethachlor, dimethametryn, dimethenamid, dimethenamid-P, dimetrasulfuron, dinitramine, dinoterb, dinoterb-acetate, diphenamid, diquat, diquat-dibromid, diquat-dichloride, dithiopyr, diuron, DNOC, DNOC-ammonium, DNOC-potassium, DNOC-sodium, endothal, endothal-diammonium, endothal-dipotassium, endothal-disodium, Epyrifenacil (S-3100), EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenpyrazone, fenquinotrione, fentrazamide, flamprop, flamprop-isoproyl, flamprop-methyl, flamprop-M-isopropyl, flamprop-M-methyl, flazasulfuron, florasulam, florpyrauxifen, florpyrauxifen-benzyl, fluazifop, fluazifop-butyl, fluazifop-methyl, fluazifop-P, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium und - methyl, fluoroglycofen, fluoroglycofen-ethyl, flupropanate, flupropanate-sdium, flupyrsulfuron, flupyrsulfuron-methyl, flupyrsulfuron-methyl-sodium, fluridone, flurochloridone, fluroxypyr, fluroxypyr-butometyl, fluroxypyr-meptyl, flurtamone, fluthiacet, fluthiacet-methyl, fomesafen, fomesafen-sodium, foramsulfuron, foramsulfuron sodium salt, fosamine, fosamine-ammonium, glufosinate, glufosinate-ammonium, glufosinate-sodium, L-glufosinate-ammonium, L-glufosiante-sodium, glufosinate-P-sodium, glufosinate-P-ammonium, glyphosate, glyphosate-ammonium, isopropyl¬ammonium, diammonium, -dimethylammonium, -potassium, -sodium, sesquisodium and - trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, haloxifopsodium, hexazinone, HNPC-A8169, i.e. prop-2-yn-1-yl (2S)-2-{3-[(5-tert-butylpyridin-2-yl)oxy]phenoxy}propanoate, HW-02, i.e. 1-(Dimethoxyphosphoryl)-ethyl-(2,4-dichlorphenoxy)acetat, hydantocidin, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazaquin.methyl, imazethapyr, imazethapyr-immonium, imazosulfuron, indanofan, indaziflam, iodosulfuron, iodosulfuron-methyl, iodosulfuron-methyl-sodium, ioxynil, ioxynil-lithium, -octanoate, -potassium und -sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, ketospiradox-potassium, lactofen, lenacil, linuron, MCPA, MCPA-butotyl, -butyl, - dimethylammonium, -diolamine, -2-ethylhexyl, -ethyl, -isobutyl, isoctyl, -isopropyl, - isopropylammonium, -methyl, olamine, -potassium, -sodium and -trolamine, MCPB, MCPB-methyl, ethyl und -sodium, mecoprop, mecoprop-butotyl, mecoprop- demethylammonium, mecoprop-diolamine, mecoprop-etexyl, mecoprop-ethadyl, mecoprop-isoctyl, mecoprop-methyl, mecoprop-potassium, mecoprop-sodium, and mecoprop-trolamine, mecoprop-P, mecoprop-P-butotyl, - dimethylammonium, -2-ethylhexyl and -potassium, mefenacet, mefluidide, mefluidide-diolamine, mefluidide-potassium, mesosulfuron, mesosulfuron-methyl, mesosulfuron sodium salt, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinate, monolinuron, monosulfuron, monosulfuron-methyl, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, NC-656, i.e. 3-[(isopropylsulfonyl)methyl]-N-(5-methyl-1,3,4-oxadiazol-2-yl)-5-(trifluoromethyl)[1,2,4]triazolo[4,3-a]pyridine-8-carboxamide, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefone, oxyfluorfen, paraquat, paraquat-dichloride, paraquat-dimethylsulfate, pebulate, pendimethalin, penoxsulam, pentachlorphenol, pentoxazone, pethoxamid, petroleum oils, phenmedipham, phenmedipham-ethyl, picloram, picloram-dimethylammonium, picloram-etexyl, picloram-isoctyl, picloram-methyl, picloram-olamine, picloram-potassium, picloram-triethylammonium, picloram-tripromine, picloram-trolamine, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinclorac-dimethylammonium, quinclorac-methyl, quinmerac, quinoclamine, quizalofop, quizalofop-ethyl, quizalofop-P, quizalofop-P-ethyl, quizalofop-P-tefuryl, QYM201, i.e. 1-{2-chloro-3-[(3-cyclopropyl-5-hydroxy-1-methyl-1H-pyrazol-4-yl)carbonyl]-6-(trifluoromethyl)phenyl} piperidin-2-one, rimsulfuron, saflufenacil, sethoxydim, siduron, simazine, simetryn, SL-261, sulcotrione, sulfentrazone, sulfometuron, sulfometuron-methyl, sulfosulfuron, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (trichloro acetic acid) and its salts, e.g. TCA-ammonium, TCA-calcium, TCA-ethyl, TCA-magnesium, TCA-sodium, tebuthiuron, tefuryltrione, tembotrione, tepral¬oxydim, terbacil, terbucarb, terbumeton, terbuthylazine, terbutryn, tetflupyrolimet, thaxtomin, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, triclopyr-butotyl, triclopyr-choline, triclopyr-ethyl, triclopyr-triethylammonium, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, 3-(2-chloro-4-fluoro-5-(3-methyl-2,6-dioxo-4-trifluoromethyl-3,6-dihydropyrimidin-1 (2H)-yl)phenyl)-5-methyl-4,5-dihydroisoxazole-5-carboxylic acid ethyl ester, 3-chloro-2-[3-(difluoromethyl)isoxazolyl-5-yl]phenyl-5-chloropyrimidin-2-yl ether, 2-(3,4-dimethoxyphenyl)-4-[(2-hydroxy-6-oxocyclohex-1-en-1-yl)carbonyl]-6-methylpyridazine-3(2H)-one, 2-({2-[(2-methoxyethoxy)methyl]-6-methylpyridin-3-yl}carbonyl)cyclohexane-1,3-dione, (5-hydroxy-1-methyl-1H-pyrazol-4-yl)(3,3,4-trimethyl-1,1-dioxido-2,3-dihydro-1-benzothiophen-5-yl)methanone, 1-methyl-4-[(3,3,4-trimethyl-1,1-dioxido-2,3-dihydro-1-benzothiophen-5-yl)carbonyl]-1H-pyrazol-5-yl propane-1-sulfonate, 4-{2-chloro-3-[(3,5-dimethyl-1H-pyrazol-1-yl)methyl]-4-(methylsulfonyl)benzoyl}-1-methyl-1H-pyrazol-5-yl 1,3-dimethyl-1H-pyrazole-4-carboxylate; cyanomethyl 4-amino-3-chloro-5-fluoro-6-(7-fluoro-1H-indol-6-yl)pyridine-2-carboxylate, prop-2-yn-1-yl 4-amino-3-chloro-5-fluoro-6-(7-fluoro-1H-indol-6-yl)pyridine-2-carboxylate, methyl 4-amino-3-chloro-5-fluoro-6-(7-fluoro-1H-indol-6-yl)pyridine-2-carboxylate, 4-amino-3-chloro-5-fluoro-6-(7-fluoro-1H-indol-6-yl)pyridine-2-carboxylic acid, benzyl 4-amino-3-chloro-5-fluoro-6-(7-fluoro-1H-indol-6-yl)pyridine-2-carboxylate, ethyl 4-amino-3-chloro-5-fluoro-6-(7-fluoro-1H-indol-6-yl)pyridine-2-carboxylate, methyl 4-amino-3-chloro-5-fluoro-6-(7-fluoro-1-isobutyryl-1H-indol-6-yl)pyridine-2-carboxylate, methyl 6-(1-acetyl-7-fluoro-1H-indol-6-yl)-4-amino-3-chloro-5-fluoropyridine-2-carboxylate, methyl 4-amino-3-chloro-6-[1-(2,2-dimethylpropanoyl)-7-fluoro-1H-indol-6-yl]-5-fluoropyridine-2-carboxylate, methyl 4-amino-3-chloro-5-fluoro-6-[7-fluoro-1-(methoxyacetyl)-1H-indol-6-yl]pyridine-2-carboxylate, potassium 4-amino-3-chloro-5-fluoro-6-(7-fluoro-1H-indol-6-yl)pyridine-2-carboxylate, sodium 4-amino-3-chloro-5-fluoro-6-(7-fluoro-1H-indol-6-yl)pyridine-2-carboxylate, butyl 4-amino-3-chloro-5-fluoro-6-(7-fluoro-1H-indol-6-yl)pyridine-2-carboxylate, 4-hydroxy-1-methyl-3-[4-(trifluoromethyl)pyridin-2-yl]imidazolidin-2-one, 3-(5-tert-butyl-1,2-oxazol-3-yl)-4-hydroxy-1-methylimidazolidin-2-one.

Preferred are the herbicide combinations (A) + (B) comprising one or more of the compounds of formula (Ia) or salt thereof (= herbicides (A)) with herbicides (B) selected from the group consisting of, for example, the carbamates, thiocarbamates, haloacetanilides, substituted phenoxy-, naphthoxy- and phenoxyphenoxycarboxylic acid derivatives and heteroaryloxyphenoxyalkanecarboxylic acid derivatives, such as quinolyloxy-, quinoxalyloxy-, pyridyloxy-, benzoxazolyloxy- and benzothiazolyloxyphenoxyalkanecarboxylic acid esters, cyclohexanedione oximes, benzoylcyclohexanediones, benzoylisoxazoles, benzoylpyrazoles, imidazolinones, pyrimidinyloxypyridinecarboxylic acid derivatives, pyrimidyloxybenzoic acid derivatives, sulfonylureas, sulfonylaminocarbonyltriazolinones, triazolopyrimidinesulfonamide derivatives, phosphinic acid derivatives and salts thereof, glycine derivatives, triazolinones, triazinones and also S-(N-aryl-N-alkylcarbamoylmethyl)dithiophosphoric esters, pyridinecarboxylic acids, pyridines, pyridinecarboxamides, 1,3,5-triazines and others.

Preference is given here to herbicide combinations (A) + (B) comprising one or more of the compounds of formula (Ia) or salt thereof (= herbicides (A)) with herbicides (B) selected from the group consisting of diflufenican, glufosinate, glyphosate, paraquat, diquat, aclonifen, oxadiazon, oxadiargyl, pyraflufen, pyraflufen-ethyl, flufenacet, indaziflam, pyroxasulfone, rimsulfuron, acetochlor, dimethanamid, pethoxamid, isoxaben, dichlobenil fluridon, flurochloridon, flurtamone, fluometuron, saflufenacil, triflumioxazin, oxyflurofen, SYN-523 such as [[3-[2-Chlor-5-[3,6-dihydro-3-methyl-2,6-dioxo-4-(trifluormethyl)-1(2H)-pyrimidinyl]-4-fluorphenoxy]-2-pyridinyl]oxy]-acetic acid ethylester, ethofumesate, phenmedipham, dicamba, 2,4-D, tembotrione, mesotrione, as well as esters and salts of these compounds (where appropriate).

Some of said compounds belong to the same structural type or same type of mode of action or both. In such cases herbicidal properties of combinations (A) with other herbicides (B) are similar if these herbicides belong to the same structural type and/or mode of action compared with the herbicidal combinations (A) + (B) specifically mentioned above and below.

Salts are generally agriculturally applicable salts, preferably metal salts such as alkaline metal salts, or optionally substituted ammonium salts, such as ammonium salts, mono-, di- or tri-alkyl or - hydroxyalkylammonium salts.

Preferred combinations (A) + (B) are selected from the above combinations wherein (A) is a racemic compound from table 1 having the number A(1.26), (A1.68) (or a mixture of two or more of said compounds.

The weight ratio of Compounds (A) to pesticide can be varied within wide limits, and its optimum weight ratio depends both on the Compounds (A) and pesticide employed and on the kind of useful plants to be treated. The ratio by weight of compound(s) (A) to compound(s) (B) is, for example, 1000:1 to 1: 1000, preferably 200:1 to 1:200, in particular 100:1 to 1:100.

If the compounds are combined with other herbicidal active ingredients (B) the practical application rates of herbicides (A) may generally be reduced, preferably in the range of 0.01 to 2000 g active ingredient (= compounds (**I**)) per hectare (a.i./ha), preferably of from 0.5 to 500 g a.i./ha, more preferably 5 bis 200 g a.i./ha. The combined application rates of compounds (A) + (B) are preferably within the range of from 0.01 to 3000 g a.i./ha, more particularly of from 0.02 to 1000 g a.i./ha.

Another object of the invention is the advantageous use of the above herbicidal combinations for spot-treatment application against weeds on an agricultural field where a plurality of crop plants grow, have been sown, have been transplanted, are to be sown and/or are to be transplanted.

Another advantageous property found for the combination according to the invention of herbicides (A) and (B) is that the active compounds (A) and (B) are compatible with one another, i.e. they can be used together without substantial chemical incompatibilities of the active compounds (A) and/or (B) resulting in a decomposition of one or more active compounds. A reduction of the active compound content in formulations or spray liquors is thus avoided. The favorable compatibility also extends to the biological properties of the active compounds when applied in combination. Thus, antagonistic effects in the control of harmful plants are generally not observed with the active compound combinations according to the invention. Accordingly, the active compounds (A) and (B) are particularly suitable for joint application or application additionally with further active crop protection agents or agrochemicals. The possible combined application allows advantageous effects to be utilized, such as, for example, the widening of the spectrum of the harmful plants to be controlled or to be combated in an application, a reduction of the application rate of the individual herbicides (A) and/or (B) compared to the respective application rate of the herbicide in question in an individual application. Thus, the degradation properties of the active compounds can be influenced, and more favorable conditions for the replanting of crop plants can be achieved. A further advantage consists in the fact that the development of resistances of harmful plants to the active compounds can frequently be reduced substantially or avoided by combinations of active compounds having a different mechanism of action.

In particular, surprisingly, there are also superadditive (= synergistic) effects in the combined application of the active compounds (A) and (B) with a relatively large number of economically important harmful plants. Here, the activity of the combination is stronger than the expected sum of the activities of the individual herbicides employed.

The synergistic effects allow the application rate to be reduced further, a broader spectrum of broad-leaved weeds and weed grasses to be controlled, a more rapid onset of the herbicidal action, a longer persistency, a better control of the harmful plants with only one or a few applications and a widening of the application period possible. To some extent, by using the compositions, the amount of harmful ingredients, such as nitrogen or oleic acid, and their introduction into the soil are also likewise reduced.

The abovementioned properties and advantages are desired for weed control practice to keep agricultural crops free of unwanted competing plants, and thus to ensure and/or increase yield levels from the qualitative and quantitative angle. These novel combinations markedly exceed the technical state of the art with a view to the properties described.

The synergistic effects are observed when the active compounds (A) and (B) are applied together; however, they may frequently also occur when the compounds are applied as a split spot-treatment application over time. Another possibility is the spot-treatment application of the herbicides (A) or (B) or the herbicide combinations (A) and (B) in a plurality of portions (sequential application). For example, one or more pre-emergence applications may be followed by a post-emergence application, or an early post-emergence application may be followed by applications at medium or late post-emergence. Preferred is the simultaneous or nearly simultaneous application of the active compounds of the combination in question, if appropriate in a plurality of portions. However, it is also possible to apply the individual active compounds of a combination at different times, which may be advantageous in the individual case. It is also possible to integrate other crop protection agents, such as, for example, the other active compounds mentioned (other herbicides, fungicides, insecticides, acaricides, etc.) and/or various auxiliaries, adjuvants and/or fertilizer applications in the system of application.

Application by the pre-emergence or post-emergence method is, depending on the context in which the terms are used, to be understood as meaning the application of the active compounds before or after the point in time when the harmful plants become visible above the ground, respectively, or the application of the active compounds against the harmful plants before the emergence of the crop plants and after the emergence of the crop plants, respectively.

The herbicides (A), optionally in combination with herbicides (B), can also be applied together with other type (C) active ingredients. The herbicides (A), optionally in combination with herbicides (B), can also be applied together with other type (C) active ingredients.

Type (C) active ingredients are selected from the group consisting of insecticides, acaricides, fungicides, safeners, fertilizers and/or growth regulators or nutrients useful for treating the plurality of crop plants against phytopathogenic diseases or for growth regulation or growth promotion of the plurality of crop plants on the agricultural field, and optionally, formulation auxiliaries.

The above combinations also optionally additionally, or preferably comprise safeners as components (C). Safeners are mentioned in the context of herbicidal combination partners already. Examples for safeners are :
Benoxacor, Cloquintocet(-mexyl), Cyometrinil, Cyprosulfamide, Dichlormid, Fenchlorazole(-ethyl), Fenclorim, Flurazole, Fluxofenim, Furilazole, Isoxadifen(-ethyl), Mefenpyr(-diethyl), Naphthalic anhydride, Oxabetrinil, "AD-67" oder "MON 4660" (= 3-Dichloracetyl-1-oxa-3-aza-spiro[4,5]decan), "TI-35" (= 1-Dichloracetyl-azepan), "Dimepiperate" oder "MY-93" (= Piperidin-1-thiocarbonsaure-S-1-methyl-1-phenylethylester), "Daimuron" oder "SK 23" (= 1-(1-Methyl-1-phenylethyl)-3-p-tolyl-harnstoff), "Cumyluron" = "JC-940" (= 3-(2-Chlorphenylmethyl)-1-(1-methyl-1-phenyl-ethyl)harnstoff),
preferably Benoxacor, Cloquintocet(-mexyl), Cyprosulfamide, Isoxadifen(-ethyl) or Mefenpyr(-diethyl).

The compounds of formula (Ia) or combinations with other active ingredients (B) and/or (C) can be formulated in various ways, depending on the prevailing biological and/or chemico-physical parameters. Examples of possible formulations which are suitable are: wettable powders (WP), water-soluble powders (SP), water-soluble concentrates, emulsifiable concentrates (EC), emulsions (EW) such as oil-in-water and water-in-oil emulsions, sprayable solutions, suspension concentrates (SC), dispersions on an oil or water basis, solutions which are miscible with oil, capsule suspensions (CS), dusts (DP), seed-dressing products, granules for broadcasting and soil application, granules (GR) in the form of microgranules, spray granules, coated granules and adsorption granules, water-dispersible granules (WG), water-soluble granules (SG), ULV formulations, microcapsules and waxes.

These individual formulation types are known in principle and described, for example, in: Winnacker-Küchler, "Chemische Technologie" [Chemical Technology], Volume 7, C. Hanser Verlag, Munich, 4th Edition 1986; Wade van Valkenburg, "Pesticide Formulations", Marcel Dekker, N.Y., 1973; K. Martens, "Spray Drying Handbook", 3rd Ed. 1979, G. Goodwin Ltd. London.

The necessary formulation auxiliaries such as inert materials, surfactants, solvents and other additives are also known and described, for example, in: Watkins, "Handbook of Insecticide Dust Diluents and Carriers", 2nd Ed., Darland Books, Caldwell N.J.; H.v. Olphen, "Introduction to Clay Colloid Chemistry", 2nd Ed., J. Wiley & Sons, N.Y.; C. Marsden, "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte" [Surface-active ethylene oxide adducts], Wiss. Verlagsgesell., Stuttgart 1976; Winnacker-Küchler, "Chemische Technologie" [Chemical Technology], Volume 7, C. Hanser Verlag, Munich, 4th Ed. 1986.

Based on these formulations, it is also possible to prepare combinations with other pesticidally active substances (C) such as, for example, insecticides, acaricides, herbicides, fungicides, and with safeners, fertilizers and/or growth regulators, for example in the form of a readymix or a tank mix.

Wettable powders are preparations which are uniformly dispersible in water and which, besides the compounds of formula (Ia), also comprise ionic and/or nonionic surfactants (wetters, dispersants), for example, polyoxyethylated alkylphenols, polyoxyethylated fatty alcohols, polyoxyethylated fatty amines, fatty alcohol polyglycol ether sulfates, alkanesulfonates or alkylbenzenesulfonates, sodium lignosulfonate, sodium 2,2'-dinaphthylmethane-6,6'-disulfonate, sodium dibutylnaphthalenesulfonate or else sodium oleoylmethyltaurinate, in addition to a diluent or inert substance. To prepare the wettable powders, the compounds of formula (Ia) are, for example, ground finely in conventional apparatuses such as hammer mills, blower mills and airjet mills and mixed with the formulation auxiliaries, either concomitantly or thereafter.

Emulsifiable concentrates are prepared, for example, by dissolving the compounds of formula (Ia) in an organic solvent, for example butanol, cyclohexanone, dimethylformamide, xylene or else higher-boiling aromatics or hydrocarbons or mixtures of these, with addition of one or more ionic and/or nonionic surfactants (emulsifiers). Emulsifiers which can be used are, for example: calcium salts of alkylarylsulfonic acids, such as calcium dodecylbenzenesulfonate or nonionic emulsifiers, such as fatty acid polyglycol esters, alkylaryl polyglycol ethers, fatty alcohol polyglycol ethers, propylene oxide/ethylene oxide condensates, alkyl polyethers, sorbitan esters such as sorbitan fatty acid esters or polyoxyethylene sorbitan esters such as polyoxyethylene sorbitan fatty acid esters.

Dusts are obtained by grinding the active substance with finely divided solid substances, for example talc or natural clays, such as kaolin, bentonite or pyrophyllite, or diatomaceous earth.

Suspension concentrates may be water- or oil-based. They can be prepared, for example, by wet grinding by means of commercially available bead mills, if appropriate with addition of surfactants, as they have already been mentioned above for example in the case of the other formulation types.

Emulsions, for example oil-in-water emulsions (EW), can be prepared for example by means of stirrers, colloid mills and/or static mixtures using aqueous organic solvents and, if appropriate, surfactants as they have already been mentioned above for example in the case of the other formulation types.

Granules can be prepared either by spraying the compounds of formula (Ia) onto adsorptive, granulated inert material or by applying active substance concentrates onto the surface of carriers such as sand, kaolinites or of granulated inert material, by means of binders, for example polyvinyl alcohol, sodium polyacrylate or alternatively mineral oils. Suitable active substances can also be granulated in the manner which is conventional for the production of fertilizer granules, if desired in a mixture with fertilizers.

Water-dispersible granules are prepared, as a rule, by the customary processes such as spray-drying, fluidized-bed granulation, disk granulation, mixing in high-speed mixers and extrusion without solid inert material. To prepare disk, fluidized-bed, extruder and spray granules, see, for example, processes in "Spray-Drying Handbook" 3rd ed. 1979, G. Goodwin Ltd., London; J.E. Browning, "Agglomeration", Chemical and Engineering 1967, pages 147 et seq.; "Perry's Chemical Engineer's Handbook", 5th Ed., McGraw-Hill, New York 1973, p. 8-57.

For further details on the formulation of crop protection products, see, for example, G.C. Klingman, "Weed Control as a Science", John Wiley and Sons, Inc., New York, 1961, pages 81-96 and J.D. Freyer, S.A. Evans, "Weed Control Handbook", 5th Ed., Blackwell Scientific Publications, Oxford, 1968, pages 101-103.

As a rule, the agrochemical preparations comprise 0.1 to 99% by weight, in particular 0.1 to 95% by weight, of compounds of formula (Ia). The concentration of compounds of formula (Ia) in wettable powders is, for example, approximately 10 to 90% by weight, the remainder to 100% by weight being composed of customary formulation components. In the case of emulsifiable concentrates, the concentration of compounds of formula (Ia) can amount to approximately 1 to 90, preferably 5 to 80% by weight. Formulations in the form of dusts usually comprise 1 to 30% by weight of compounds of formula (Ia), preferably in most cases 5 to 20% by weight of compounds of formula (Ia), while sprayable solutions comprise approximately 0.05 to 80, preferably 2 to 50% by weight of compounds of formula (Ia). In the case of water-dispersible granules, the content of compounds of formula (Ia) depends partly on whether the compounds of formula (Ia) are in liquid or solid form and on which granulation auxiliaries, fillers and the like are being used. The water-dispersible granules, for example, comprise between 1 and 95% by weight of active substance, preferably between 10 and 80% by weight.

In addition, the formulations of compounds of formula (Ia) mentioned comprise, if appropriate, the adhesives, wetters, dispersants, emulsifiers, penetrants, preservatives, antifreeze agents, solvents, fillers, carriers, colorants, antifoams, evaporation inhibitors, pH regulators and viscosity regulators which are conventional in each case.

The compounds of the formula (Ia) or their salts can be employed as such or in the form of their preparations (formulations) as combinations with other pesticidally active substances, such as, for example, insecticides, acaricides, nematicides, herbicides, fungicides, safeners, fertilizers and/or growth regulators, for example as a premix or as tank mixes.

Formulation examples
a) A dust is obtained by mixing 10 parts by weight of a compound of formula (Ia) and 90 parts by weight of talc as inert material and grinding the mixture in a hammer mill.
b) A wettable powder which is readily dispersible in water is obtained by mixing 25 parts by weight of a compound of formula (Ia), 64 parts by weight of kaolin-containing quartz as inert material, 10 parts by weight of potassium lignosulfonate and 1 part by weight of sodium oleoylmethyltaurinate as wetter and dispersant and grinding the mixture in a pinned-disk mill.
c) A dispersion concentrate which is readily dispersible in water is obtained by mixing 20 parts by weight of a compound of formula (Ia) with 6 parts by weight of alkylphenol polyglycol ether (^{®}Triton X 207), 3 parts by weight of isotridecanol polyglycol ether (8 EO) and 71 parts by weight of paraffinic mineral oil (boiling range for example approx. 255 to above 277°C) and grinding the mixture in a ball mill to a fineness of below 5 microns.
d) An emulsifiable concentrate is obtained from 15 parts by weight of a compound of formula (I), 75 parts by weight of cyclohexanone as solvent and 10 parts by weight of oxethylated nonylphenol as emulsifier.
e) Water-dispersible granules are obtained by mixing
   75 parts by weight of a compound of formula (I),
   10 parts by weight of calcium ligno-sulfonate,
   5 parts by weight of sodium laurylsulfate,
   3 parts by weight of polyvinyl alcohol and
   7 parts by weight of kaolin,
   grinding the mixture in a pinned disk mill and granulating the powder in a fluidized bed by spraying on water as granulation liquid.
f) Alternatively, water-dispersible granules are obtained by homogenizing and precomminuting, on a colloid mill,
   25 parts by weight of a compound of formula (I),
   5 parts by weight of sodium 2,2'-dinaphthylmethane-6,6'-disulfonate,
   2 parts by weight of sodium oleoylmethyltaurinate,
   1 part by weight of polyvinyl alcohol,
   17 parts by weight of calcium carbonate and
   50 parts by weight of water,
   subsequently grinding the mixture on a bead mill and atomizing and drying the resulting suspension in a spray tower by means of a single-substance nozzle.

Biological Examples (only the instances involving compound A 1.26 or compound A 1.68 are according the present invention)

### Example 1:

Sunflower (HELAN), Corn (ZEAMD) and Soybeans (GLXMA) were planted in a standard planting system with 30 in row spacing and grown until they reached a BBCH growth stage of 16 - 18; 12 - 13 and 14, respectively.
Application was made using a CO₂ pressurized backpack sprayer and a handheld two nozzle boom, operating at 2,75 bar. Each of the nozzles (TeeJet Extended Air Induction nozzle 0015) was equipped with a plastic hood covering a 38 cm band left and right of each crop row and preventing unintended spray drift outside the band. The spray solution covered a band of roughly 38 cm on either side of the crop row with an average distance 8 cm to the row center and 2 - 10 cm distance between soil surface and lower end of the spray shield. The application was made at damp soil conditions and a windspeed of 0 - 10 km/h. All treatments included 1.5 L of an methylated seed oil (MSO) and 2 Kg/ha Ammonium sulfate (AMS) salt source and were mixed into 1 L fraction of an equivalent to 187 L / ha spray solution.
The crop injury assessments were conducted as visual assessments at 15, 28 and 45 days after application (DAA) in case of Sunflower and soybeans and at 14 and 27 DAA in case of com. Also in case of Table 5 assessments were done in soybeans at 15, 25 and 44 DAA. The crop injury was rated were visually on a percentage scale in relation to the untreated control (100% = all plants dead; 50% = green plant biomass reduced by 50%, and 0% = no discernible difference = like control plot). Table 2 to 5 show that the compounds of the invention control weeds and lead to no or minor crop injury on the tested crops. Comparative herbicidal compounds (Tembotrione + Isoxadifen-Ethyl and Glyphosate + Isoxaflutole) show - with the exception on corn - significant crop injury when applied as described herein above.

**Table 2:**

| | | | Sunflower (HELAN) | | |
|---|---|---|---|---|---|
| | | | 15 DAA | 28 DAA | 45 DAA |
| *Active Ingredient* | *g a.i.*/*ha* | *Adjuvant* | *Crop injury [% untreated]* | | |
| Compound A 1.68 (see table 1) | 300 | MSO + AMS | 20 | 15 | 8 |
| Compound A 1.68 (see table 1) | 150 | MSO + AMS | 3 | 0 | 0 |
| Tembotrione + Isoxadifen-Ethyl | 300 | MSO + AMS | 80 | 70 | 68 |
| Glyphosate + Isoxaflutole | 1440 + 150 | MSO + AMS | 90 | 93 | 95 |

**Table 3:**

| | | | Corn (ZEAMD) | |
|---|---|---|---|---|
| | | | 14 DAA | 27 DAA |
| *Active Ingredient* | *g a.i.*/*ha* | *Adjuvant* | *Crop injury [% untreated]* | |
| Compound A 1.68 (see table 1) | 300 | MSO + AMS | 18 | 12 |
| Compound A 1.68 (see table 1) | 150 | MSO + AMS | 10 | 7 |
| Tembotrione + Isoxadifen-Ethyl | 300 | MSO + AMS | 0 | 0 |
| Glyphosate + Isoxaflutole | 1440 + 150 | MSO + AMS | 0 | 0 |

**Table 4:**

| | | | Soybeans (GLXMA) | | |
|---|---|---|---|---|---|
| | | | 15 DAA | 28 DAA | 45 DAA |
| *Active Ingredient* | *g a.i.*/*ha* | *Adjuvant* | *Crop injury [% untreated]* | | |
| Compound A 1.68 (see table 1) | 300 | MSO + AMS | 25 | 22.5 | 20 |
| Compound A 1.68 (see table 1) | 150 | MSO + AMS | 5 | 10 | 8 |
| Tembotrione + Isoxadifen-Ethyl | 300 | MSO + AMS | 80 | 87.5 | 88 |
| Glyphosate + Isoxaflutole | 1440 + 150 | MSO + AMS | 80 | 90 | 95 |

**Table 5:**

| | | | Soybeans (GLXMA) | | |
|---|---|---|---|---|---|
| | | | 15 DAA | 25 DAA | 44 DAA |
| *Active Ingredient* | *g a.i.*/*ha* | *Adjuvant* | *Crop injury [% untreated]* | | |
| Compound A 1.68 (see table 1) | 200 | MSO + AMS | 4 | 0 | 0 |
| Compound A 1.68 (see table 1) | 100 | MSO + AMS | 2 | 0 | 0 |
| Glyphosate | 1440 | MSO + AMS | 0 | 0 | 0 |
| Glyphosate + Isoxaflutole | 1440 + 150 | MSO + AMS | 17 | 13 | 0 |

### Example 2:

In a second set of trials Soybeans (GLXMA) were planted in a standard planting system with 30 in row spacing and grown until they reached a BBCH growth stage of 11 - 12 or roughly 12cm average height.
Application was made using a CO₂ pressurized backpack sprayer and a handheld 6 nozzle boom, operating at 2,5 bar. The application was made at damp soil conditions and a windspeed of 0 - 15 km/h. The crop rows were covered during the actual spray application using upside down metal rain gutters (10 cm x 10 cm depth x width) covering the crop and the soil below of about 5 cm on either side from the crop row center. All treatments included 1.5 L of a methylated seed oil (MSO) and 2 Kg/ha Ammonium sulfate (AMS) salt source and were mixed into 1 L fraction of an equivalent to 200 L / ha spray solution.
The crop injury assessments were conducted as visual assessments at 7, 14, 28 and 42 days after application (DAA). The crop injury was rated were visually on a percentage scale in relation to the untreated control (100% = all plants dead; 50% = green plant biomass reduced by 50%, and 0% = no discernible difference = like control plot). Table 6 shows that the compounds of the invention do not cause any crop injury when applied as described above.

**Table 6:**

| | | | Soybeans (GLXMA) | | | |
|---|---|---|---|---|---|---|
| | | | 7 DAA | 15 DAA | 28 DAA | 45 DAA |
| *Active Ingredient* | *g a.i.*/*ha* | *Adjuvant* | *Crop injury [% untreated]* | | | |
| Compound A 1.68 (see table 1) | 200 | MSO + AMS | 0 | 0 | 0 | 0 |
| Compound A 1.68 (see table 1) | 100 | MSO + AMS | 0 | 0 | 0 | 0 |
| Compound A 1.26 (see table 1) | 200 | MSO + AMS | 0 | 0 | 0 | 0 |
| Compound A 1.26 (see table 1) | 100 | MSO + AMS | 0 | 0 | 0 | 0 |
| Glyphosate | 1440 | MSO + AMS | 0 | 0 | 0 | 0 |
| Glyphosate + Isoxaflutole | 1440 + 105 | MSO + AMS | 14 | 20 | 15 | 15 |

### Example 3:

In a third set of trials pepper plants (*Capsicum frutescens L.,* CPSFR) were manually transplanted at a growth stage of BBCH 13 in a field and grown until they reached BBCH growth stage of 14 or roughly 10 cm average crop height.
Application was made using a compressed air sprayer and a handheld 1 nozzle spray lance. The nozzle was shielded by a spray shield to prevent unintended spray drift during application. The application was made at damp soil conditions and calm wind around each single pepper plant. The crop plants were shielded from spray drift during application and spray slurry reached only the soil and weed cover surrounding the pepper plants.
The crop injury assessments were conducted as visual assessments at 7, 14, 28 and 42 days after application (DAA). The crop injury was rated were visually on a percentage scale in relation to the untreated control (100% = all plants dead; 50% = green plant biomass reduced by 50%, and 0% = no discernible difference = like control plot). Table 7 shows that the compounds of the invention do not cause any crop injury when applied as described above.

**Table 7:**

| | | Pepper plants (*Capsicum frutescens L.,* CPSFR) | | |
|---|---|---|---|---|
| | | 5 DAA | 7 DAA | 14 DAA |
| *Active Ingredient* | *g a.i.*/*ha* | *Crop injury [% untreated]* | | |
| Compound A 1.68 (see table 1) | 100 | 0 | 0 | 0 |
| Compound A 1.68 (see table 1) | 150 | 0 | 0 | 0 |
| Flufenacet + Metribuzin | 240 + 175 | 0 | 0 | 0 |
| Aclonifen + Oxadiazon | 400 + 250 | 0 | 0 | 0 |
| Compound A 1.68 (see table 1) + Oxadiazon | 100 + 250 | 0 | 0 | 0 |
| Compound A 1.68 (see table 1) + Aclonifen | 100 + 600 | 0 | 0 | 0 |

## Claims

1. Use of one or more compounds of the formula **(Ia)** or salts thereof,, 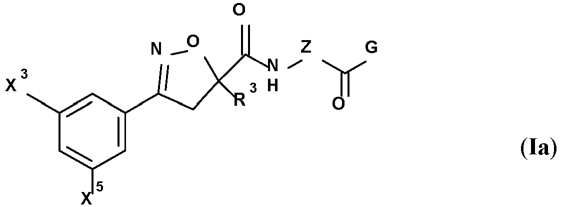
in which X³, X⁵, R³ and 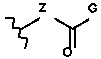
are as follows:
| X³ | X⁵ | R³ | 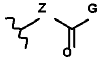 |
|---|---|---|---|
| F | F | (S)-vinyl | 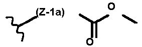 |
| F | F | (S)-vinyl | 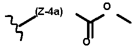 |
wherein Z-1a means: 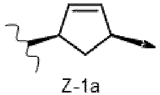
and wherein Z-4a means the mixture of both structures Z-4b and Z-4c; 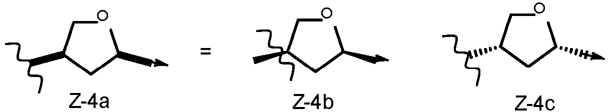
for spot-treatment application against weeds of an agricultural field where a plurality of crop plants grow, have been sown, have been transplanted, are to be sown and/or are to be transplanted.

2. Use as claimed in claims 1, **characterized by** spot-treatment application against weeds of (A) one or more compounds of the formula (Ia) or a salt thereof [type (A) herbicides], optionally together, before or after the application of one or more other active ingredients selected from the group consisting of (B) other herbicides [type (B) herbicides] useful in the treatment of an agricultural field with a plurality of crop plants, and optionally together, before or after the application of one or more (C) other active ingredients [type (C) active ingredients] useful in the treatment of an agricultural field with a plurality of crop plants.

3. Use as claimed in claim 2, **characterized in that** the herbicides (B) are selected from the group consisting of diflufenican, glufosinate, glyphosate, paraquat, diquat, aclonifen, oxadiazon, oxadiargyl, pyraflufen, pyraflufen-ethyl, flufenacet, indaziflam, pyroxasulfone, rimsulfuron, acetochlor, dimethanamid, pethoxamid, isoxaben, dichlobenil fluridon, flurochloridon, flurtamone, fluometuron, saflufenacil, triflumioxazin, oxyflurofen, SYN-523 such as [[3-[2-Chlor-5-[3,6-dihydro-3-methyl-2,6-dioxo-4-(trifluormethyl)-1(2H)-pyrimidinyl]-4-fluorphenoxy]-2-pyridinyl]oxy]-acetic acid ethylester, ethofumesate, phenmedipham, dicamba, 2,4-D, tembotrione, mesotrione, as well as esters and salts of these compounds.

4. Use as claimed in claim 2 or 3, **characterized in that** the active ingredients (C) are selected from the group consisting of
insecticides, acaricides, fungicides, safeners, fertilizers and/or growth regulators or nutrients useful for treating the plurality of crop plants against phytopathogenic diseases or for growth regulation or growth promotion of the plurality of crop plants on the agricultural field.

5. Use as claimed in any one of claims 1 to 4, **characterized by** spot-treatment application against weeds of a compound of formula (Ia) or salt thereof on the agricultural field before or after emergence of the weeds.

6. Use as claimed in any one of claims 1 to 5, **characterized by** spot-treatment application against weeds of a compound of formula (Ia) or salt thereof on the agricultural field wherein spot-treatment is performed with hooded sprayer equipment and/or with drift reduction nozzle sprayer equipment.

7. Use as claimed in any one of claims 1 to 6, **characterized by** spot-treatment application against weeds of a compound of formula (Ia) or salt thereof on the agricultural field wherein spot-treatment is performed with a precision farming vehicle.

8. Use as claimed in any one of claims 1 to 7, **characterized by** spot-treatment application against weeds of a compound of formula (Ia) or salt thereof on the agricultural field wherein the application of the compound of formula (Ia) or salt thereof to the foliar part of the plurality of crop plants on the agricultural field is avoided.

9. Use as claimed in any one of claims 1 to 8, **characterized by** a spot-treatment application against weeds from 0.01 to 2000 g compound of formula (Ia) or salt thereof per hectare on the agricultural field where a plurality of crop plants grow, have been sown, have been transplanted, are to be sown and/or are to be transplanted.

10. Method for spot-treatment application against weeds on an agricultural field where a plurality of crop plants grow, have been sown or are to be sown, **characterized by** spot-spraying application of (A) one or more compounds of the formula (Ia) or a salt thereof [type (A) herbicides], optionally together, before or after the application of one or more other active ingredients selected from the group consisting of (B) other herbicides [type (B) herbicides] useful in the treatment of an agricultural field with a plurality of crop plants, and optionally together, before or after the application of one or more (C) other active ingredients [type (C) active ingredients] useful in the treatment of an agricultural field with a plurality of crop plants.

## Patentansprüche

1. Verwendung von einer oder mehreren Verbindungen der Formel(**Ia**) oder deren Salzen, 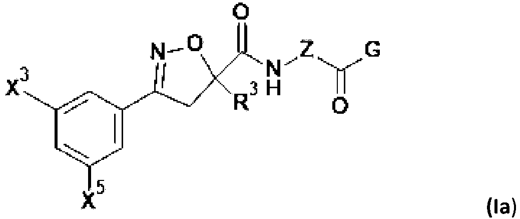
in welcher X³, X⁵, R³ und 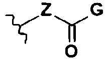
wie folgt sind:
| X³ | X⁵ | R³ | 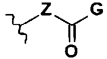 |
|---|---|---|---|
| F | F | (S)-Vinyl | 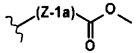 |
| F | F | (S)-Vinyl | 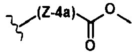 |
worin Z-1a bedeutet: 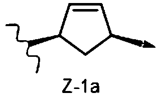
und wobei Z-4a die Mischung der beiden Strukturen Z-4b und Z-4c bedeutet; 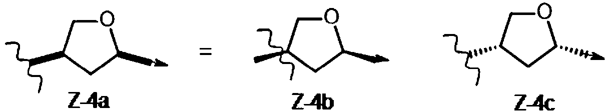 zur punktuellen Anwendung gegen Unkräuter auf einem landwirtschaftlichen Feld, auf dem eine Vielzahl von Kulturpflanzen wächst, gesät wurde, verpflanzt wurde, gesät werden soll und/oder verpflanzt werden soll.

2. Verwendung nach Anspruch 1, **gekennzeichnet durch** die punktuelle Anwendung gegen Unkräuter von (A) einer oder mehreren Verbindungen der Formel (Ia) oder eines Salzes davon [Typ (A) Herbizide], gegebenenfalls zusammen, vor oder nach der Anwendung eines oder mehrerer anderer Wirkstoffe, ausgewählt aus der Gruppe bestehend aus (B) anderen Herbiziden [Typ (B) Herbizide], die bei der Behandlung eines landwirtschaftlichen Feldes mit einer Vielzahl von Kulturpflanzen nützlich sind, und gegebenenfalls zusammen, vor oder nach der Anwendung eines oder mehrerer (C) anderer Wirkstoffe [Typ (C) Wirkstoffe], die bei der Behandlung eines landwirtschaftlichen Feldes mit einer Vielzahl von Kulturpflanzen nützlich sind.

3. Verwendung nach Anspruch 2, **dadurch gekennzeichnet, dass** die Herbizide (B) ausgewählt sind aus der Gruppe bestehend aus Diflufenican, Glufosinat, Glyphosat, Paraquat, Diquat, Aclonifen, Oxadiazon, Oxadiargyl, Pyraflufen, Pyraflufen-ethyl, Flufenacet, Indaziflam, Pyroxasulfon, Rimsulfuron, Acetochlor, Dimethanamid, Pethoxamid, Isoxaben, Dichlobenil, Fluridon, Flurochloridon, Flurtamone, Fluometuron, Saflufenacil, Triflumioxazin, Oxyflurofen, SYN-523 wie [[3-[2-Chlor-5-[3,6-dihydro-3-methyl-2,6-dioxo-4-(trifluormethyl)-1(2H)-pyrimidinyl]-4-fluorphenoxy]-2-pyridinyl]oxy]-Essigsäureethylester, Ethofumesat, Phenmedipham, Dicamba, 2,4-D, Tembotrion, Mesotrion sowie Ester und Salze dieser Verbindungen.

4. Verwendung nach Anspruch 2 oder 3, **dadurch gekennzeichnet, dass** die Wirkstoffe (C) ausgewählt sind aus der Gruppe bestehend aus Insektiziden, Akariziden, Fungiziden, Safenern, Düngemitteln und/oder Wachstumsregulatoren oder Nährstoffen, die zur Behandlung der Vielzahl von Kulturpflanzen gegen phytopathogene Erkrankungen oder zur Wachstumsregulierung bzw. Wachstumsförderung der Vielzahl von Kulturpflanzen auf dem landwirtschaftlichen Feld nützlich sind.

5. Verwendung nach einem der Ansprüche 1 bis 4, **dadurch gekennzeichnet, dass** eine Verbindung der Formel (la) oder ein Salz davon vor oder nach dem Auflaufen der Unkräuter als punktuelle Anwendung gegen Unkräuter auf dem landwirtschaftlichen Feld angewendet wird.

6. Verwendung nach einem der Ansprüche 1 bis 5, **dadurch gekennzeichnet, dass** eine Verbindung der Formel (la) oder ein Salz davon auf dem landwirtschaftlichen Feld als punktuelle Anwendung gegen Unkräuter beansprucht wird, wobei die punktuelle Anwendung mit einer Haubenspritzausrüstung und/oder mit einer Spritzausrüstung mit Driftminderungsdüsen durchgeführt wird.

7. Verwendung nach einem der Ansprüche 1 bis 6, **gekennzeichnet durch** die punktuelle Anwendung einer Verbindung der Formel (la) oder eines Salzes davon gegen Unkräuter auf dem landwirtschaftlichen Feld, wobei die punktuelle Anwendung mit einem Präzisionslandwirtschaftsfahrzeug durchgeführt wird.

8. Verwendung nach einem der Ansprüche 1 bis 7, **gekennzeichnet durch** die punktuelle Anwendung einer Verbindung der Formel (la) oder eines Salzes davon gegen Unkräuter auf dem landwirtschaftlichen Feld, wobei die Anwendung der Verbindung der Formel (la) oder des Salzes davon auf den Blattteil der Vielzahl von Kulturpflanzen auf dem landwirtschaftlichen Feld vermieden wird.

9. Verwendung nach einem der Ansprüche 1 bis 8, **gekennzeichnet durch** eine punktuelle Anwendung gegen Unkräuter von 0,01 bis 2000 g der Verbindung der Formel (la) oder ihres Salzes pro Hektar auf dem landwirtschaftlichen Feld, auf dem eine Vielzahl von Kulturpflanzen wächst, gesät wurde, verpflanzt wurde, gesät werden soll und/oder verpflanzt werden soll.

10. Verfahren zur punktuellen Anwendung gegen Unkräuter auf einem landwirtschaftlichen Feld, auf dem eine Vielzahl von Kulturpflanzen wächst, gesät wurde, verpflanzt wurde oder gesät und/oder verpflanzt werden soll, **gekennzeichnet durch** die punktuelle Anwendung von (A) einer oder mehreren Verbindungen der Formel (la) oder eines Salzes davon [Typ (A) Herbizide], gegebenenfalls zusammen, vor oder nach der Anwendung eines oder mehrerer anderer Wirkstoffe, ausgewählt aus der Gruppe bestehend aus (B) anderen Herbiziden [Typ (B) Herbizide], die für die Behandlung eines landwirtschaftlichen Feldes mit einer Vielzahl von Kulturpflanzen nützlich sind, und gegebenenfalls zusammen, vor oder nach der Anwendung eines oder mehrerer (C) anderer Wirkstoffe [Typ (C) Wirkstoffe], die für die Behandlung eines landwirtschaftlichen Feldes mit einer Vielzahl von Kulturpflanzen nützlich sind.

## Revendications

1. Utilisation d'un ou de plusieurs composés de la formule(la) ou de leurs sels, 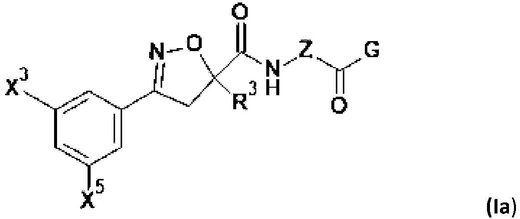
dans laquelle X³, X⁵, R³ et 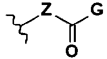
sont les suivants :
| | | | |
|---|---|---|---|
| X³ | X⁵ | R³ | 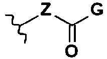 |
| F | F | (S)-vinyle | 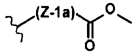 |
| F | F | (S)-vinyle | 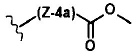 |
dans laquelle Z-1a signifie : 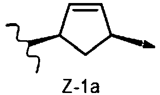
et dans laquelle Z-4a signifie le mélange des deux structures Z-4b et Z-4c ; 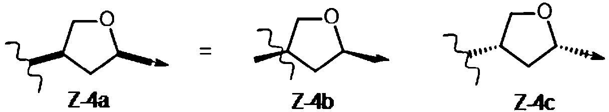
pour une application en traitement localisé contre les mauvaises herbes d'un champ agricole où une pluralité de plantes cultivées poussent, ont été semées, ont été transplantées, doivent être semées et/ou doivent être transplantées.

2. Utilisation selon la revendication 1, **caractérisée par** l'application en traitement localisé contre les mauvaises herbes de (A) un ou plusieurs composés de la formule (la) ou d'un de leurs sels [herbicides de type (A)], éventuellement ensemble, avant ou après l'application d'une ou de plusieurs autres matières actives sélectionnées dans le groupe constitué par (B) d'autres herbicides [herbicides de type (B)] utiles dans le traitement d'un champ agricole comportant une pluralité de plantes cultivées, et éventuellement ensemble, avant ou après l'application d'une ou de plusieurs autres matières actives (C) [matières actives de type (C)] utiles dans le traitement d'un champ agricole comportant une pluralité de plantes cultivées.

3. Utilisation selon la revendication 2, **caractérisée en ce que** les herbicides (B) sont constitués par le diflufenican, le glufosinate, le glyphosate, le paraquat, le diquat, l'aclonifen, l'oxadiazon, l'oxadiargyl, le pyraflufen, le pyraflufen-éthyl, le flufenacet, l'indaziflam, le pyroxasulfone, le rimsulfuron, l'acétochlore, le diméthanamide, le péthoxamide, l'isoxabène, le dichlobénil, le fluridon, le flurochloridon, le flurtamone, le fluométuron, le saflufénacil, la triflumioxazine, l'oxyflurofen, le SYN-523 tel que [[3-[2-Chlor-5-[3,6-dihydro-3-méthyl-2,6-dioxo-4-(trifluorméthyl)-1(2H)-pyrimidinyl]-4-fluorphénoxy]-2-pyridinyl]oxy]-éthylester d'acide acétique, l'éthofumesate, le phenmedipham, le dicamba, le 2,4-D, le tembotrione, la mésotrione, ainsi que les esters et les sels de ces composés.

4. Utilisation selon la revendication 2 ou 3, **caractérisée en ce que** les matières actives (C) sont constituées d'insecticides, d'acaricides, de fongicides, d'agents phytoprotecteurs, d'engrais et/ou de régulateurs de croissance ou de nutriments utiles pour traiter la pluralité de plantes cultivées contre les maladies phytopathogènes ou pour réguler ou favoriser la croissance de la pluralité de plantes cultivées sur le champ agricole.

5. Utilisation selon l'une quelconque des revendications 1 à 4, **caractérisée par** une application en traitement localisé contre les mauvaises herbes d'un composé de formule (la) ou d'un de ses sels sur le champ agricole avant ou après l'émergence des mauvaises herbes.

6. Utilisation selon l'une quelconque des revendications 1 à 5, **caractérisée par** une application en traitement localisé contre les mauvaises herbes d'un composé de formule (la) ou d'un sel de celui-ci sur le champ agricole, le traitement localisé étant effectué avec un équipement de pulvérisation à capuchon et/ou avec un équipement de pulvérisation à buse de réduction de la dérive.

7. Utilisation selon l'une quelconque des revendications 1 à 6, **caractérisée par** une application en traitement localisé contre les mauvaises herbes d'un composé de formule (la) ou d'un sel de celui-ci sur le champ agricole, le traitement localisé étant effectué à l'aide d'un véhicule d'agriculture de précision.

8. Utilisation selon l'une quelconque des revendications 1 à 7, **caractérisée par** l'application en traitement localisé contre les mauvaises herbes d'un composé de formule (la) ou de son sel sur le champ agricole, l'application du composé de formule (la) ou de son sel sur la partie foliaire de la pluralité de plantes cultivées sur le champ agricole étant évitée.

9. Utilisation selon l'une quelconque des revendications 1 à 8, **caractérisée par** une application en traitement localisé contre les mauvaises herbes de 0,01 à 2000 g de composé de formule (la) ou de son sel par hectare sur le champ agricole où une pluralité de plantes cultivées poussent, ont été semées, ont été transplantées, doivent être semées et/ou doivent être transplantées.

10. Procédé de traitement localisé contre les mauvaises herbes dans un champ agricole où une pluralité de plantes cultivées poussent, ont été semées ou vont être semées, **caractérisé par** la pulvérisation localisée de (A) un ou plusieurs composés de la formule (la) ou d'un de leurs sels [herbicides de type (A)], éventuellement ensemble, avant ou après l'application d'une ou de plusieurs autres matières actives choisies dans le groupe constitué par (B) d'autres herbicides [herbicides de type (B)] utiles dans le traitement d'un champ agricole comportant une pluralité de plantes cultivées, et éventuellement ensemble, avant ou après l'application d'une ou de plusieurs matières actives (C) [matières actives de type (C)] utiles dans le traitement d'un champ agricole comportant une pluralité de plantes cultivées.
